# NEW EUROPEAN PATENT SPECIFICATION

(11) **EP 0 098 584 B2**
(45) Date of publication and mention of the opposition decision: **29.12.1993**
(45) Mention of the grant of the patent: 19.10.1988
(21) Application number: 83106557.8
(22) Date of filing: 05.07.1983
(51) Int. Cl.: F02P 5/04

(54) **An ignition timing control method for internal combustion engines**
Zündzeitpunktsteuerverfahren für Brennkraftmaschine
Procédé de commande d'allumage pour un moteur à combustion interne

(30) Priority: 05.07.1982 JP 115379/82
(43) Date of publication of application: 18.01.1984
(73) Proprietor: HITACHI, LTD., Chiyoda-ku, Tokyo 100 (JP)
(72) Inventor: Sugiura, Noboru, Mito-shi Ibaraki-ken (JP)
(74) Representative: Beetz & Partner Patentanwälte

(56) References cited:
- EP-A- 0 029 374
- EP-A- 0 032 333
- EP-B- 0 018 858
- FR-A- 2 472 091
- GB-A- 2 024 317
- GB-A- 2 030 644

## Description

The present invention relates to a method for controlling the ignition timing for a multiple cylinder internal combustion engine on the basis of knock control according to the preamble of Claim 1.

Such a method is known from the GB-A-2 024 317.

In recent years, attempts have been made to burn a lean fuel mixture in order to reduce the consumption of fuel in the internal combustion engine. If the lean fuel mixture is burned in a conventional engine, however, the output of the engine decreases. Therefore, attempts have been made to increase the compression efficiency of the engine to increase its output per unit A/F, in order to increase the engine output. Knocking, however, develops easily with an increase in the compression ratio of the engine. Knocking which develops in the engine is accompanied by a knocking sound and reduces running performance. It also generates a counter torque which reduces the engine output and which causes the engine to overheat so that it could break down. Knocking has a close relationship to ignition timing, and it is known that the engine produces its maximum output when the ignition timing, i.e., the ignition angle, is set to the point just before that at which knocking develops. Reduction in the advance of the ignition angle to avoid the development of knocking results in a decrease in the engine output. It is therefore desired to advance the ignition timing to the point just before that at which knocking develops. In an engine which is equipped with a turbo-charger and which has a high compression ratio, in particular, it is necessary to obtain the optimum ignition timings in order to maintain the maximum efficiency. Therefore, it is conventional practice to bring the ignition timing back to the point just before that at which knocking develops, if knocking has developed.

In a conventional knock controller, for example that in a four-cylinder engine, a single knock sensor is installed, the development of knocking is detected by detection signals produced by the knock sensor, and the ignition timings for all of the cylinders are controlled under the same conditions by the knock signals of the single knock sensor, however, knocking is not properly detected and controlled due to different degrees of knocking produced in each of the cylinders or due to differences in detecting knocking that result from the place at which the knock sensor is installed in the engine.

The above-mentioned GBA-2 024 317 comprises first circuitry for producing a function of the intensity of combustion knock in each cylinder in a sequence, second circuitry for storing the function of each cylinder respectively in a memory circuit each of which corresponds to a specific cylinder and third circuitry for determining the ignition timing of each cylinder by modifying the basic ignition timing determined by an advance mechanism in accordance with the respectively stored functions.

The knock sensor provided at the internal combustion engine detects a knock level and the cylinders are identified by a cylinder detector. Alternatively the GB-A-2 024 317 proposes to provide pickups or pressure sensors separately for each cylinder to measure the pressure of shock waves caused by the knock in each cylinder. Thereby the cylinder detector is unnecessary because the respective cylinder can be identified by the respective pickup. The GB-A-2 024 317 has thus the drawback that the more sensors are provided the more circuitry and cables are necessary which are eventually disturbed by noise produced by the internal combustion engine.

The FR-A-2 472 091 and the GB-A-2 030 644 disclose known ignition timing control systems for internal combustion engines using knock control. The FR-A-2 472 091 detects a knock signal by a knock sensor and identifies the cylinder by crank angle signals. This prior art reference never shows that the correction of reference values for detecting knock for each cylinder separately is effected for each identified cylinder as in the present invention.

The GB-A-2 030 644 comprises a resonant type vibration sensor having a mechanical resonance frequency within the knocking frequency range of the engine. The vibration sensor is arranged on the engine and the sensor output signal is processed and the spark timing is adjusted to obtain an optimum knocking condition for each cylinder. The signal processing is performed by comparators which compare the output signal of the sensor with a signal representative of a mean engine vibration level. Counters are connected with the comparators and provide respective spark timing delay signals for the cylinders.

Thus the device disclosed by the GB-A-2 030 644 uses as the knock reference value a signal reprsentative of a mean engine vibration level.

The object of the present is to provide a method for controlling the ignition time for internal combustion engines having a multiple of cylinders on the basis of knock control which is capable of maintaining the ignition timings at the optimum positions for each cylinder of the engine and which uses only a single knock sensor.

The above object is solved in a method according to the preamble of Claim 1 according to the invention by the characterizing steps of Claim 1.

The subclaims 2 to 6 characterize advantageous developments thereof.

An embodiment of the present invention will be apparent from the following brief description of the drawings and the detailed description of the preferred embodiments.

### Brief description of drawings

Figure 1 is a schematic diagram showing the complete construction and system of a proposed embodiment for carrying out the proposed method;
Figure 2 is an operation timing chart for the system shown in Figure 1 performed in accordance with the present invention;
Figure 3 is a table showing retardations relative to corrected knock counts;
Figure 4 is a diagram showing correction levels for the cylinders of the engine;
Figure 5 is a flow chart for the knock control method of the engine performed in accordance with the present invention; and
Figure 6 is a flow chart for the advance of the igntion timing angle performed in accordance with the present invention.

### Detailed desciption of the preferred embodiments

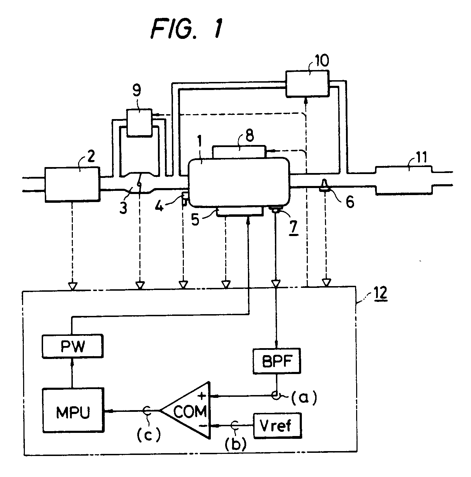

Referring now to Figure 1 showing a proposed embodiment. An intake system of an internal combustion engine is equipped with a sensor 2 for detecting the quantity of intake air, a throttle valve 3 for adjusting the intake air rate, and a control valve 9 in a pipe that communicates the upstream side of the throttle valve with the downstream side thereof. The exhaust system is equipped with an exhaust gas purification unit 11 and a gas sensor at a place on the upstream side of the exhaust gas purification unit 11. A part of the exhaust gas is returned to the intake system via a control valve 10. A cooling water temperature sensor 4, a knock sensor 7 for detecting the knocking as vibrations of the engine, a sensor 5 for detecting the rotational angle of the engine crank shaft and which also works as an ignition device, and a fuel control device 8 are installed on the engine 1. A module 12 receives signals from the above sensors and carries out calculations to actuate the fuel control device 8, the ignition device 5, and control valves 9 and 10 to operate the engine. The knock sensor 7 converts the vibrations of the engine into electrical signals which are then processed by a unit consisting of a band-pass filter BPF, a comparator COM and a reference signal generator Vref in the module 12. The signals are then processed by a main processing unit MPU to actuate the ignition device which is known per se, via a drive circuit PW, thereby controlling the ignition timing. The MPU includes a random access memory (RAM) for contemporarily hold the data necessary to perform the processing therein, and a read only memory (ROM) in which is memorized data necessary to perform the procession.

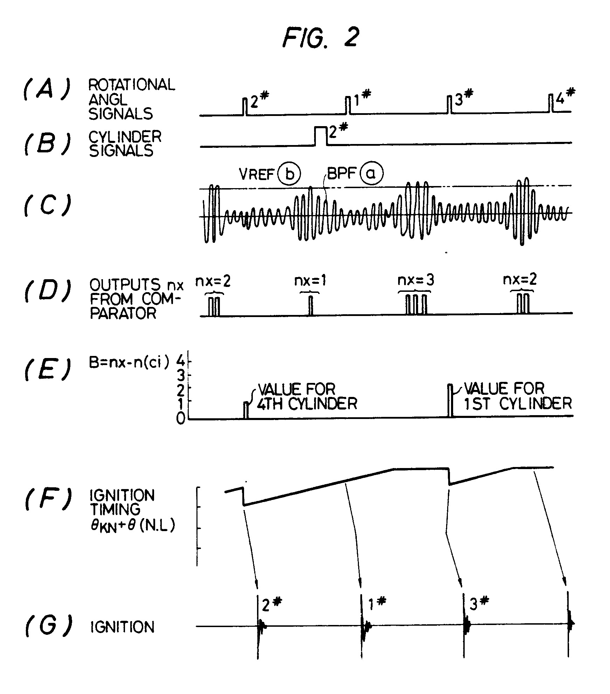

The operation of this embodiment will be described below. First, if abnormal combustion takes place in a combustion chamber or cylinder of the engine, changes in the pressure become the amplitude of vibration waves which are transmitted to the knock sensor 7. The vibration waves are detected by the knock sensor 7. Output signals produced by the knock sensor 7 contain noise components so the band-pass filter BPF in the module 12 selectively identifies the frequency band specific to the knocking, and signals are produced as shown by ⓐ in Figure 2(C). The reference voltage generator Vref produces a constant voltage shown by ⓑ in Figure 2(C). The output signals of the knock sensor 7 are compared with the reference voltage in the comparator COM to produce pulse signals as shown in Figure 2(D). The pulse signals are integrated for each of the cylinders according to signals shown in Figure 2(b) identifying the cylinders. The rotational angle signals shown in Figure 2(A) identify the number of the cylinder with reference to the cylinder signal shown in Figure 2(B). Thus, the first rotational angle signal appearing after the cylinder signal is decided to be the signal representing the first cylinder, the second one for the third cylinder and the third one for the fourth and so on. After reference to a predetermined knock detection level (a sensitivity level determined by the number of integrated pulses determining the development of knocking), the integrated pulses are produced as knock signals for retarding the ignition timing as shown in Figure 2(E). The retardation of the engine ignition timing is determined by the signals shown in Figure 2(E), which is then reflected on the ignition timing as shown in Figure 2(F), and the ignition is effected as shown in Figure 2(G). The signals shown in Figure 2(A) are rotational angle signals, i.e., interrupt signals produced for each of the cylinders.

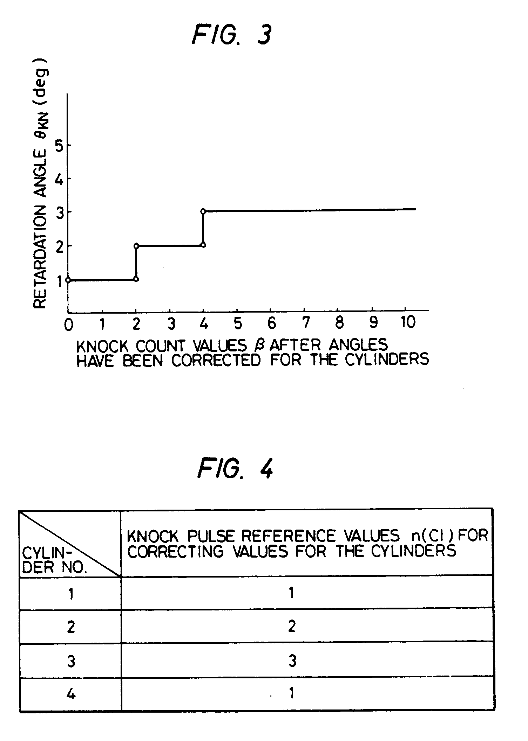

Figure 3 shows the retardation angle ϑKN relative to knock signal counts β after a correction has been effected for each of the cylinders. The retardation angle ϑKN for the knock signal count β is common for all cylinders, and the angle ϑKN is retarded by 1 degree for the count two (β=2). Correction for the cylinders is effected as shown, for example, in Figure 4. That is, a decision is rendered for the first cylinder that no knocking has developed when only one pulse signal shown in Figure 2(D) is generated, and the decision that knocking has develolped is rendered when two pulse signals are generated. A decision is rendered for the second cylinder that no knocking has developed when two or less pulse signals are generated, and ordinary knock control is performed when three or more pulse signals are produced. For the third cylinder, knock control is performed when four or more pulse signals are generated, and for the fourth cylinder is performed the knock control when two or more pulse signals are generated. Thus, the knock determination level is varied for each of the cylinders depending on the location of the cylinders with respect to the sensor 7. This is because, when only one knock sensor 7 is provided for the plural cylinders of the engine, large difference developed in the outputs of the knock sensor 7 depending upon the mounting position, i.e., knocking developed in the cylinder positioned nearer to the knock sensor 7 can be easily detected, but the knocking in the cylinder far from it can barely sensed.

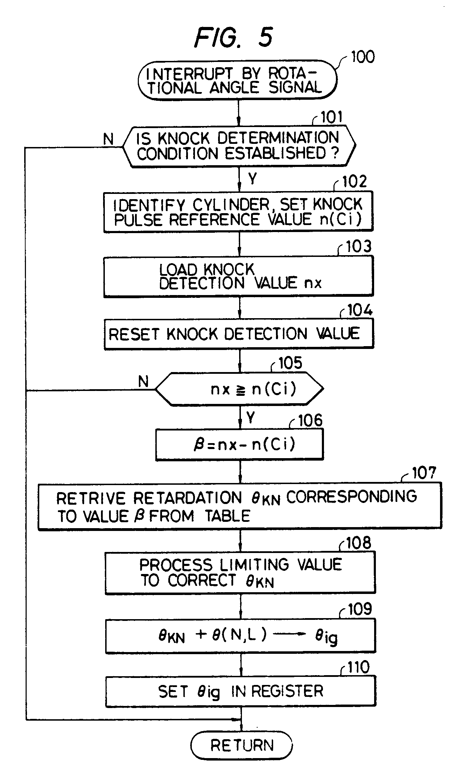

The retardation control flow of this embodiment will be described below, referring to Figure 5. When an interrupt due to the rotational angle signal is received at step 100, step 101 discriminates whether or not a knock determination condition is established, i.e., discriminates whether the temperature of the cooling water is higher than a predetermined value. When the step 101 discriminates that the knock determination condition is established, step 102 identifies the number of the cylinder and sets a knock pulse reference value n(Ci) corresponding to that cylinder to the value as shown in Figure 4. When a knock pulse reference value is set by the step 102, step 103 loads a knock detection value nx. The knock detection value nx is the number of knock pulses actually counted by a counter in the MPU. Step 104 resets the knock detection value loaded, to prepare for counting the pulses for the next cylinder. The knock detection value nx loaded in the step 103 and the knock pulse reference value n(Ci) set in the step 102 are compared in step 105. That is, the step 105 determines whether nx is greater than n(Ci) (nx(nx≧n(Ci)). When the knock detection value nx is determined to be greater than the knock pulse reference value n(Ci), it means that knocking has developed.

In step 106, a corrected knock count β is calculated according to the relationship β=nx-n(Ci) for each of the cylinders. When the value of β is calculated, step 107 retrieves or reads from the table shown in Figure 3, a retardation angle ϑKN, which varies in proportion to the value β. When the value ϑKN is in excess of a certain limit, step 108 executes limit processing. As the retardation ϑKN is determined relative to the knock count β, step 109 adds the retardation to a present ignition timing ϑ(N, L) (determined by the running speed of the engine and the load) to find the next ignition timing ϑig. This ignition timing ϑig is set in a register in the next step 110.

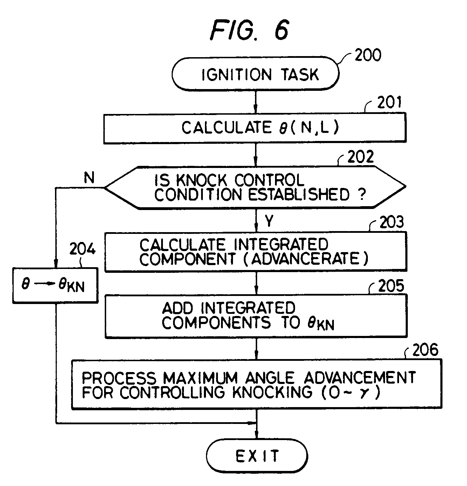

The advance control flow after retardation is descibed below with reference to Figure 6. That is, when the ignition task is started in step 200, step 201 calculates the ignition timing ϑ from the running speed of the engine and the load. Step 202 then determines whether the knock control condition has been established, i.e., determines whether the temperature of the cooling water is higher than a predetermined value. When it is determined that the knock control condition has been established, step 203 calculates the integrated component (the advance rate). When the step 202 determines that the knock control condition has not been established, step 204 passes on the ignition timing ϑ as a retardation angle ϑKN. When the step 203 has calculated the integrated component, step 205 adds the integrated components to the retardation angle ϑKN and step 206 processes the maximum angle of advance to knocking control.

According to this embodiment of the present invention, therefore, the knock control for an ignition timing of the internal combustion engine can be achieved in an optimum manner for each of the cylinders simply by providing one knock sensor.

According to this embodiment of the present invention, furthermore, no limitations are imposed on the positions for mounting the knock sensor, i.e., an increased degree of freedom can be obtained concerning the positions for mounting the sensor on the engine.

According to the present invention as explained above, the ignition timings can be maintained at their optimum angle positions for each of the cylinders of the engine.

## Claims

1. A method for controlling the ignition timing for a multiple cylinder internal combustion engine on the basis of knock control, wherein a single knock sensor detects knocking developed in the cylinders of the engine and
ignition means generate ignition pulses for producing sparks for each of the cylinders of the engine,
comprising following steps:
identifying each of the plural cylinders of the engine according to the operation of the engine,
detecting the knocking developed in each of the plural cylinders according to knock detection levels for respective cylinders,
and
determining the ignition timing according to the knocking detected by the above step,
characterized by the following steps:
(1) storing beforehand the pulse reference value for each of the plural cylinders as a predetermined number of pulses (ncᵢ) determined according to the knock sensitivity characteristics of the single knock sensor (7) which vary in correspondence to the relative location of the knock sensor with respect to each of the cylinders,
(2) identifying the number of the cylinder by reference of rotational crank angle signals (A) to a cylinder signal (B), thus the first rotational crank angle signal appearing after the cylinder signal being the signal representing the first cylinder and the further cylinders being identified according to the order of said crank angle signals with respect to the cylinder signal,
(3) comparing the vibrational output signal of the knock sensor (7) with a predetermined reference voltage (v_{ref}), thus producing a pulse signal representing a knock detection value consisting in a variable number of pulses (nx),
(4) substracting from the variable number of pulses (nx), representing the knock detection value, the number of pulses (ncᵢ) prestored for the presently identified cylinder, thus detecting the knocking developed in each of the respective cylinders,
(5) determining the angle of retardation for each cylinder according to the number of pulses resulting from said substraction step.

## Patentansprüche

1. Verfahren zur Zündzeitpunktsteuerung einer Verbrennungsmaschine mit mehreren Zylindern auf der Basis einer Klopfüberwachung, wobei ein einzelner Klopfsensor das Klopfen erfaßt, das in den Zylindern der Maschine auftritt und wobei Zündvorrichtungen Zündpulse zur Erzeugung von Funken in jedem der Zylinder der Maschine generieren, mit folgenden Schritten:
Identifizieren eines jeden der Mehrzahl der Zylinder der Maschine nach dem Betriebszustand der Maschine;
Erfassen des Klopfens in jedem der Mehrzahl von Zylindern über die Klopfmeßwertgröße eines jeden Zylinders, und
Bestimmung des Zündzeitpunkts über das im vorherigen Schritt erfaßte Klopfen,
**gekennzeichnet** durch folgende Schritte:
(1) vorheriges Speichern eines Pulsbezugswertes für jeden der Mehrzah der Zylinder als eine vorbestimmte Anzahl von Pulsen (ncᵢ), die gemäß der Klopfempfindlichkeitscharakteristik des einzelnen Klopfsensors (7) bestimmt werden, die sich in Abhängigkeit von der Relativlage des Klopfzensors zu jedem der Zylinder ändert,
(2) Identifizierung der Nummer des Zylinders durch den Bezug von Kurbelwellensignalen (a) zu einem Zylindersignal (b), wobei das erste Kurbelwellensignal, das nach dem Zylindersignal auftritt das Signal ist, das den ersten Zylinder identifiziert und die weiteren Zylinder nach der Reihenfolge der Kurbelwellensignale bezüglich des Zylindersignals identifiziert werden,
(3) Vergleichen des Vibrationsausgangssignals des Klopfsensors (7) mit einer vorbestimmten Bezugsspannung (V_{ref}), wodurch ein Pulssignal erzeugt wird, das einen Klopferfassungswert darstellt, der aus einer variablen Anzahl von Pulsen (nx) besteht,
(4) Subtrahieren der vorgespeicherten Anzahl von Pulsen (ncᵢ) für den momentanen identifizierten Zylinder von der variablen Anzahl von Pulsen (nx), die den Klopferfassungwert darstellen, wodurch das Klopfen erfaßt wird, das in jedem der jeweiligen Zylinder auftritt, und
(5) Bestimmen des Verzögerungswinkels für jeden Zylinder, aus der Anzahl der Pulse, die aus dem obigen Substraktionsschritt resultieren.

## Revendications

1. Procédé pour commander la séquence d'allumage pour un moteur à combustion interne à plusieurs cylindres sur la base d'une commande du cognement, selon lequel un seul détecteur de cognement détecte le cognement apparaissant dans les cylindres du moteur, et
des moyens d'allumage produisent des impulsions d'allumage servant à produire des étincelles pour chacun des cylindres du moteur,
comprenant les étapes suivantes consistant à :
identifier chacun des différents cylindres du moteur conformément au fonctionnement de ce dernier,
détecter le cognement produit dans chacun des différents cylindres conformément à des niveaux de détection de cognement pour des cylindres respectifs, et
déterminer la séquence d'allumage en fonction du cognement détecté lors de l'étape précédente,
caractérisé par les étapes suivantes consistant à
(1) mémoriser par avance la valeur de référence des impulsions pour chacun des différents cylindres sous la forme d'un nombre prédéterminé d'impulsions (ncᵢ) déterminé en fonction des caractéristiques de sensibilité au cognement du détecteur unique de cognement (7), qui varient en fonction de la position relative du détecteur de cognement par rapport à chacun des cylindres,
(2) identifier le numéro du cylindre en référence à des signaux (A) d'angle de rotation du vilebrequin par rapport à un signal de cylindre (B), le premier signal d'angle de rotation du vilebrequin apparaissant par conséquent après le signal de cylindre, qui est le signal représentant le premier cylindre, et les autres cylindres étant identifiés conformément à l'ordre desdits signaux d'angle du vilebrequin en référence au signal de cylindre,
(3) comparer le signal de sortie de vibration du détecteur de cognement (7) à une tension de référence prédéterminée (V_{ref}), de manière à produire un signal impulsionnel représentant une valeur de détection du cognement constituée par un nombre variable d'impulsions (nx),
(4) soustraire du nombre variable d'impulsions (nx) représentant la valeur de détection du cognement, le nombre d'impulsions (ncᵢ) préalablement mémorisé pour le cylindre actuellement identifié, ce qui permet de détecter le cognement développé dans chacun des cylindres respectifs,
(5) déterminer l'angle de retard pour chaque cylindre en fonction du nombre d'impulsions résultant de ladite étape de soustraction.
